# EUROPÄISCHE PATENTSCHRIFT

(11) **EP 3 371 864 B1**
(45) Veröffentlichungstag und Bekanntmachung des Hinweises auf die Patenterteilung: **13.05.2020**
(21) Anmeldenummer: 16775254.2
(22) Anmeldetag: 04.10.2016
(51) Int. Cl.: H02G 3/04

(54) **KABELFÜHRUNGSELEMENT**
CABLE-GUIDING ELEMENT
ÉLÉMENT DE GUIDAGE DE CÂBLE

(30) Priorität: 04.11.2015 DE 102015118903
(43) Veröffentlichungstag der Anmeldung: 12.09.2018
(73) Patentinhaber: Phoenix Contact GmbH & Co. KG, 32825 Blomberg (DE)
(72) Erfinder: REIBKE, Heinz, 32105 Bad Salzuflen (DE); BERGHAHN, Kevin, 32825 Blomberg (DE)
(74) Vertreter: Gesthuysen Patent- und Rechtsanwälte
(86) Internationale Anmeldenummer: PCT/EP2016/073620
(87) Internationale Veröffentlichungsnummer: WO 2017/076560

(56) Entgegenhaltungen:
- EP-A2- 1 974 846
- US-A1- 2013 119 219
- US-A1- 2014 367 137

## Beschreibung

Die Erfindung betrifft ein Kabelführungselement, zur Führung elektrischer Leitungen, mit mindestens zwei Kabelkanalelementen, wobei die Kabelkanalelemente schwenkbar miteinander verbunden sind.

Kabelführungselemente der eingangs genannten Art kommen immer dann zum Einsatz, wenn einzelne Leitungen oder in der Regel eine Mehrzahl von elektrischen Leitungen über eine Strecke hinweg geführt werden muss. Im Stand der Technik finden sich solche Kabelführungselemente realisiert in Form von Tragarmen für schwenkbare Geräte, wie elektrische oder medizinische Geräte Verwendung.

So offenbart die DE 297 02 047 U1 einen Tragarm, durch den elektrische Leitungen geführt werden. Der Tragarm besteht aus zwei Teilarmen und einem Armzwischenstück, die durch ein Gelenk miteinander verbunden sind, wobei die elektrischen Leitungen durch das Gelenk geführt sind. Die Teilarme sind im Bereich des Gelenks mit einem abnehmbaren Deckel ausgestattet, während das Armzwischenstück an seiner Oberseite vollständig mit einem abnehmbaren Deckel ausgestattet ist. Zum Einbringen der elektrischen Leitungen müssen die Deckel demontiert werden und die Leitungen in den Tragarm eingeführt werden, indem sie hierbei durch die Gelenke durchgefädelt werden müssen.

Auch aus der US 2013/0119219 A1 ist ein Kabelführungselement in Form eines Tragarms bekannt. Der Tragarm besteht aus mehreren Teilarmen, die jeweils durch Gelenke miteinander verbunden sind. Die elektrischen Leitungen werden in den Tragarm eingeführt, indem sie durch die einzelnen Teilarme gefädelt werden. Im Bereich der Gelenke besitzen die Tragarme dazu abnehmbare Deckel, die entfernt werden müssen, um ein Einfädeln zu ermöglichen.

Aus der US 2014/0367137 A1 ist ebenfalls ein Kabelführungselement in Form eines Tragarms bekannt, der aus zwei Teilarmen besteht. Die beiden Teilarme werden über ein Verbindungselement rotierbar miteinander verbunden, sodass zwischen den Teilarmen ein Gelenk ausgebildet wird.

Aus dem Stand der Technik ist es bisher nicht bekannt, derartige Kabelführungselemente in Schaltschränken zu verwenden, obwohl hier häufig viele elektrische Leitungen geführt werden müssen. Bei vielen Schaltschränken sind elektrische Funktionseinheiten an der Schaltschranktür platziert, so dass die elektrischen Verbindungen zwischen den Komponenten an der Schaltschranktür und den Komponenten im Schaltschrank flexibel sein müssen. In der Praxis ist es üblich, Einzelkabel mit einem Spiralband oder einem Schlauch zu einem Kabelbaum zusammen zu fügen, und in einer großen Schlaufe als Schaltschrank-Türverbindung zu verlegen. Eine solche Lösung ist schon alleine deswegen nachteilig, weil es zu einem Verklemmen des Kabelbaums oder zu einem ungewollten Betätigen von Komponenten in dem Schaltschrank kommen kann. Ein weiterer Nachteil ist der große Platzbedarf sowie der Umstand, dass die Bewegung des Kabelbaums beim Öffnen und Schließen der Schaltschranktür nicht definiert ist. Ebenfalls schwierig bzw. aufwändig ist dabei ein Nachziehen von einzelnen Leitungen. Hierzu muss unter umständen die gesamte Konstruktion demontiert und die Leitungen zu einem neuen Kabelbaum zusammengeführt werden.

Die aus dem Stand der Technik bekannten Kabelführungselemente sind für den Einsatz in Schaltschränken nur sehr begrenzt geeignet, insbesondere deswegen, weil die bekannten Tragarme nicht darauf ausgelegt sind, ein praktisches, unkompliziertes und komfortables Austauschen von Kabeln zu begünstigen. Dies ist bei den bekannten Tragarmen, die primär die Aufgabe haben, Geräte oder Teile von Geräten schwenkbar miteinander zu verbinden, auch nicht vorgesehen.

Die der Erfindung zugrunde liegende Aufgabe ist es daher, ein Kabelführungselement anzugeben, das sich insbesondere zum Einsatz in Schaltschränken eignet und bei dem auf einfache Art und Weise ein Austauschen, Hinzufügen oder Entfernen von einzelnen Leitungen möglich ist.

Diese Aufgabe ist bei dem eingangs beschriebenen Kabelführungselement mit den Merkmalen des Patentanspruchs 1 dadurch gelöst, dass ein erstes Kabelkanalelement an einem ersten Ende einen Gelenkkopf und ein zweites Kabelkanalelement an einem ersten Ende eine korrespondierende Gelenkpfanne aufweist, so dass das erste Ende des ersten Kabelkanalelements und das erste Ende des zweiten Kabelkanalelements ein Gelenk bilden, über das die Kabelkanalelemente miteinander verbunden sind. Das Gelenk wird ohne zusätzliche Teile realisiert, indem der Gelenkkopf und die Gelenkpfanne an einem Ende jeweils eines Kabelkanalelements ausgebildet sind. Dabei weist das Gelenk einen Kanal zur Durchführung der Leitungen auf. Außerdem ist in dem Gelenk eine Ausnehmung ausgebildet, die sich über die gesamte Länge des Gelenks erstreckt.

Das erfindungsgemäße Kabelführungselement zeichnet sich zunächst dadurch aus, dass auf sehr elegante Weise ein Gelenk ohne zusätzliche Teile realisiert wird, indem die Gelenkpfanne und der Gelenkkopf an einem Ende jeweils eines Kabelkanalelements ausgebildet sind. Besonders vorteilhaft ist die Ausgestaltung des Gelenkkopfes als Rohrsegment. Die korrespondierende Gelenkpfanne ist dann als offener Ring ausgebildet, so dass sie auf das Rohrsegment aufgesteckt werden kann. Hierzu weist das Rohrsegment bevorzugt eine Nut auf, in die die ringförmige Gelenkpfanne aufgenommen wird. Die Breite der Rille entspricht im wesentlichen der Breite der Gelenkpfanne, so dass die Gelenkpfanne kein oder nur ein geringes Spiel entlang der Längsachse des Gelenks hat, wenn sie mit dem Gelenkkopf verbunden ist. Die Längsachse des Gelenks entspricht dabei der Drehachse des Gelenks.

Das Gelenk weist einen Kanal zur Durchführung der elektrischen Leitungen auf, so dass die Leitungen vom ersten Kabelkanalelement zum zweiten Kabelkanalelement durch das gesamte Gelenk geführt werden können. Ist der Gelenkkopf als Rohrsegment ausgebildet, dann wird der Kanal ebenfalls durch das Rohrsegment realisiert.

Erfindungsgemäß ist in dem Gelenk eine Ausnehmung ausgebildet, die sich über die gesamte Länge des Gelenks erstreckt. Dadurch, dass sich die Ausnehmung über die gesamte Länge des Gelenks erstreckt, können elektrische Leitungen einfach durch die Ausnehmung in das Gelenk geführt werden. Auch das nachträgliche Einführen von elektrischen Leitungen lässt sich ohne Aufwand realisieren. Ebenso können auch einzelne oder alle Leitungen sehr einfach wieder aus dem Gelenk und damit auch aus dem Kabelführungselement ausgeführt werden, da ein Durchfädeln der Leitungen durch das Gelenk nicht erforderlich ist.

Die Ausnehmung weist bevorzugt über ihre gesamte Länge eine konstante Breite auf, wobei die Ausnehmung verschieden angeordnet sein kann. Vorzugsweise erstreckt sich die Ausnehmung parallel zu der Längsachse des Gelenks. Eine weitere Möglichkeit ist, dass sich die Ausnehmung unter einem Winkel zu der Längsachse des Gelenks erstreckt, wobei die Ausnehmung dann so ausgerichtet ist, dass sie nicht entgegengesetzt zur Erstreckungsrichtung der eingeführten Leitungen verläuft. Wesentlich ist jedoch nur, dass sich die Ausnehmung über die gesamte Länge des Gelenks erstreckt, so dass die Leitungen von der Seite durch die Ausnehmung in das Gelenk eingeführt werden können und nicht durch das Gelenk durchgeführt werden müssen.

Die Breite der Ausnehmung muss einerseits auf die Dicke des durchzuführenden Kabels bzw. der durchzuführenden Leitungen abgestimmt sein. Vorteilhaft ist es, die Ausnehmung so breit auszuführen, dass die Leitungen ohne Schwierigkeiten durch die Ausnehmung geführt werden können. Andererseits empfiehlt es sich, die Ausnehmung möglichst schmal zu realisieren, um die Stabilität des Gelenkes nicht zu beeinträchtigen, und um das Risiko des Hinausrutschens der in dem Kanal geführten Leitungen zu verringern.

Damit es bei einer Bewegung des Kabelführungselements nicht zu einem Verhaken der elektrischen Leitungen mit der Ausnehmung kommt, und um ein Hinausrutschen der elektrischen Leitungen oder einzelner elektrischer Leitungen aus der Ausnehmung zu verhindern, ist gemäß einer bevorzugte Ausgestaltung des erfindungsgemäßen Kabelkanalelementes ein Verschlusselement zum Verschließen der Ausnehmung vorgesehen. Das Kabelführungselement weist somit zumindest zwei Kabelkanalelemente und ein Verschlusselement für die Ausnehmung in dem zwischen beiden Kabelkanalelementen ausgebildeten Gelenk auf. Das Verschlusselement kann dabei auf verschiedene Art und Weise ausgestaltet sein. Gemäß einer einfachen Ausgestaltung ist das Verschlusselement als separates Teil realisiert, das nur zum Verschließen der Ausnehmung mit dem Gelenk verbunden, insbesondere verrastet wird. Beim Öffnen der Ausnehmung wird das Verschlusselement somit aus der Ausnehmung herausgenommen, so dass es nicht mehr mit dem Gelenk verbunden ist. Gemäß einer besonders bevorzugten Ausgestaltung des Kabelführungselements ist das Verschlusselement auch im geöffneten Zustand der Ausnehmung mit dem Gelenk verbunden, wozu das Verschlusselement als Schieber oder Schwenkteil ausgebildet sein kann. Vorteilhaft hierbei ist, dass das Verschlusselement nicht verloren gehen kann, wenn die Ausnehmung geöffnet wird, und die Ausnehmung unmittelbar nach dem Einführen der Kabel verschlossen werden kann.

Als besonders vorteilhaft hat sich eine Ausgestaltung erwiesen, bei der das Verschlusselement als Drehkulisse ausgebildet ist. Diese Ausgestaltung eignet sich insbesondere dann, wenn der Gelenkkopf als Rohrsegment ausgebildet ist. Die Drehkulisse ist dann ebenfalls als Rohrsegment ausgebildet, wobei der Außendurchmesser der Drehkulisse derart gewählt ist, dass die Drehkulisse mit möglichst geringem Spiel in dem Gelenkkopf geführt ist, der Außendurchmesser der Drehkulisse und der Innendurchmesser des Gelenkkopfes somit nahezu identisch sind. Eine Drehung der Drehkulisse erfolgt dabei um die Längsachse des Gelenkkopfs, also auch um die Drehachse des Gelenks. Die Drehkulisse weist eine Öffnung auf, die mindestens so breit ist, wie die Ausnehmung des Gelenks.

Außerdem ist an dem als Drehkulisse ausgebildeten Verschlusselement vorzugsweise ein Betätigungshebel ausgebildet oder angeordnet, mit dem ein Benutzer die Drehkulisse in dem Gelenkkopf verdrehen und damit die Ausnehmung besonderes einfach öffnen und schließen kann. In dem Gelenkkopf ist hierzu ein Schlitz ausgebildet, in dem der Betätigungshebel geführt wird. Um ein unbeabsichtigtes Öffnen der Drehkulisse zu vermeiden, kann die Drehkulisse eine Nase aufweisen. Bei einer Drehung der Drehkulisse bewegt sich die Nase entlang des Gelenks und verrastet in einer Endposition. Dazu weist der Gelenkkopf an einer Seite eine Erhebung auf, so dass die Drehkulisse arretiert werden kann.

Kabelführungselemente sind insbesondere dann vorteilhaft, wenn eine Mehrzahl von Kabeln geführt werden muss. Vorzugsweise weist bei dem erfindungsgemäßen Kabelführungselement daher mindestens ein Kabelkanalelement mindestens eine Halterung und/oder ein Loch zur Fixierung der Leitungen auf. Weist das Kabelkanalelement mindestens zwei Löcher auf, kann beispielsweise ein Kabelbinder durch die Löcher geführt werden, so dass die Leitungen mit dem Kabelbinder an dem Kabelkanalelement befestigt werden können. Auf diese Weise ist auch eine Gruppierung der Leitungen möglich. Durch das Gruppieren bzw. Aufteilen der Leitungen kann ein Verheddern der Leitungen vermieden werden. Die Gruppierung von Leitungen erleichtert auch das nachträgliche Austauschen von einzelnen Leitungen. Außer über Kabelbinder können die Leitungen auch direkt an entsprechenden Halterungen in dem Kabelkanalelement fixiert werden, wobei es bei der Ausgestaltung der Halterungen verschiedene Möglichkeiten gibt. Beispielsweise können - insbesondere verschließbare - Haken an dem Kabelkanalelement befestigt sein, in denen die Leitungen eingehakt werden können.

Zusätzlich zu seinem ersten Ende weist jedes Kabelkanalelement ein zweites Ende auf. Eine bevorzugte Ausgestaltung des erfindungsgemäßen Kabelführungselementes ist dadurch gekennzeichnet, dass die Kabelkanalelemente an ihrem zweiten Ende eine Gelenkpfanne oder einen Gelenkkopf aufweisen. Es kann demnach Kabelkanalelemente geben, die an ihrem ersten Ende einen Gelenkkopf und an ihrem zweiten Ende eine Gelenkpfanne aufweisen sowie Kabelkanalelemente, die an ihrem ersten Ende eine Gelenkpfanne und an ihrem zweiten Ende einen Gelenkkopf aufweisen. Daneben kann es auch Kabelkanalelemente geben, die an ihrem ersten und an ihrem zweiten Ende je eine Gelenkpfanne aufweisen und Kabelkanalelemente, die an ihrem ersten und an ihrem zweiten Ende je einen Gelenkkopf aufweisen.

Diese Ausgestaltung ist besonders vorteilhaft, weil sich so sehr einfach mehrere Kabelkanalelemente aneinanderfügen lassen. Aus einer Mehrzahl von Kabelkanalelementen lassen sich Kabelführungselemente beliebiger Länge zusammenbauen. So kann das Kabelführungselement in seiner Länge optimal auf den Einsatzort abgestimmt werden. Beim Zusammenbauen wird immer ein Ende eines Kabelkanalelements, das einen Gelenkkopf aufweist, mit einem Ende eines anderen Kabelkanalelements, das eine Gelenkpfanne aufweist, verbunden.

Bei einem aus zwei Kabelkanalelementen bestehenden Kabelführungselement kann beispielsweise das erste Kabelkanalelement an seinem ersten Ende einen Gelenkkopf und an seinem zweiten Ende eine Gelenkpfanne aufweisen, während das zweite Kabelkanalelement an seinen beiden Enden jeweils eine Gelenkpfanne aufweist. Das Kabelführungselement weist dann an seinen beiden freien Enden jeweils eine Gelenkpfanne auf. Alternativ können auch zwei Kabelkanalelemente verwendet werden, die jeweils an einem Ende einen Gelenckopf und an einem anderen Ende eine Gelenkpfanne aufweisen. Zur Verlängerung des Kabelführungselements kann beispielsweise an einem freien Ende des Kabelführungselements eine weiteres Kabelkanalelement befestigt werden, das an seinem ersten Ende einen Gelenkkopf aufweist, so dass das Kabelführungselement dann zwei Gelenke aufweist.

Gemäß einer bevorzugten Ausgestaltung des erfindungsgemäßen Kabelführungselements ist mindestens ein Kabelkanalendstück vorgesehen, wobei das Kabelkanalendstück einen Gelenkkopf oder eine Gelenkpfanne aufweist. Weist das Kabelkanalendstück einen Gelenkkopf auf, dann bilden das Kabelkanalendstück und das zweite Ende eines Kabelkanalelements, das eine Gelenkpfanne aufweist, zusammen ein Gelenk, über das das Kabelkanalendstück und das Kabelkanalelement miteinander verbunden sind. Weist das Kabelkanalendstück hingegen eine Gelenkpfanne auf, dann bilden das Kabelkanalendstück und das zweite Ende eines Kabelkanalelements, das einen Gelenkkopf aufweist, zusammen ein Gelenk, über das das Kabelkanalendstück und das Kabelkanalelement miteinander verbunden sind. Auch bei diesem Gelenk sind ein Kanal zur Durchführung der Leitungen und in dem Gelenk eine Ausnehmung ausgebildet, die sich über die gesamte Länge des Gelenks erstreckt.

Vorzugsweise weist das Kabelführungselement zwei Kabelkanalendstücke auf, so dass das Kabelführungselement an beiden Enden vom einem Kabelkanalendstück abgeschlossen ist. Die beiden Kabelkanalendstücke bilden dann jeweils mit dem angrenzenden freien Ende eines Kabelkanalelements ein Gelenk. Weist das Kabelkanalendstück - gemäß einer bevorzugten Ausgestaltung des Kabelführungselements - einen Befestigungsabschnitt auf, so lässt sich das Kabelführungselement einfach mit seinen beiden Enden, d. h. mit den Befestigungsabschnitten der beiden Kabelkanalendstücke an seinem Einsatzort befestigen, beispielsweise an einer Schaltschranktür und an einer geeigneten Stelle innerhalb eines Schaltschranks.

Das Kabelkanalendstück, das einen Gelenkkopf aufweist, ist vorzugsweise analog zum Gelenkkopf des ersten Kabelkanalelements ausgebildet, nämlich durch ein Rohrsegment gebildet. Für das Kabelkanalendstück gelten somit die bezüglich des Gelenkkopfes des ersten Kabelkanalelements ausgeführten Ausgestaltungen - wie beispielsweise das Vorsehen eines Verschlusselements - entsprechend. Insbesondere kann auch bei dem Kabelkanalendstück ein Verschlusselement vorgesehen sein, das vorzugsweise als Drehkulisse ausgebildet ist. Das Kabelkanalendstück, das eine Gelenkpfanne aufweist, ist vorzugsweise entsprechend der Gelenkpfanne des zweiten Kabelkanalelements ausgebildet.

Der Befestigungsabschnitt des Kabelkanalendstücks kann verschieden ausgestaltet sein. Bevorzugt ist der Befestigungsabschnitt als Flansch realisiert. Der Flansch kann dann Rastelemente oder eine oder mehrere Bohrungen für Schrauben zur Montage des Kabelführungselements aufweisen. Der Befestigungsabschnitt selbst kann einstückig mit dem Kabelkanalendstück ausgeführt sein, beispielsweise als Kunststoffspritzteil. Denkbar ist jedoch auch, dass der Befestigungsabschnitt als separates Bauteil realisiert ist und mit dem Kabelkanalendstück verbunden wird.

Um in dem Kabelführungselement geführte Leitungen vor Beschädigung und/oder Schmutz und Staub zu schützen, ist gemäß einer weiteren bevorzugten Ausgestaltung des erfindungsgemäßen Kabelführungselements vorgesehen, dass mindestens ein Kabelkanalelement eine Abdeckung aufweist, wobei sich die Abdeckung über die gesamte Länge des Kabelkanalelements erstreckt. Bevorzugt weist jedes Kabelkanalelement des Kabelführungselements eine Abdeckung auf, um die Leitungen auf der gesamten Länge des Kabelführungselements abzudecken und vor Beschädigung zu schützen. Die Abdeckung ist bei einer Ausgestaltung an dem Kabelkanalelement befestigt, beispielsweise durch Scharniere, so dass die Abdeckung zum Schließen "zugeklappt" werden muss. Ebenfalls denkbar und bevorzugt ist eine Ausgestaltung, bei der die Abdeckung zum Abdecken der Leitungen auf das Kabelkanalelement aufgesteckt wird, während sie im geöffneten Zustand nicht mit dem Kabelkanalelement verbunden ist. Vorzugsweise weisen dann das Kabelkanalelement und die Abdeckung zueinander korrespondierende Rastelemente auf, so dass die Abdeckung sicher an dem Kabelkanalelement befestigt werden kann.

Durch die erfindungsgemäße Ausgestaltung des Kabelführungselements und dadurch, dass die Leitungen durch sämtliche Gelenke geführt werden, lassen sich die Kabelkanalelemente - auch im abgedeckten Zustand - zumindest teilweise übereinander schwingen, wodurch eine hohe Flexibilität des Kabelführungselements gewährleistet ist. Dabei sind die Leitungen stets sicher an bzw. in dem Kabelführungselement geführt, so dass eine Beschädigung der Leitungen, insbesondere im abgedeckten Zustand, vermieden wird.

Im Einzelnen gibt es nun verschiedene Möglichkeiten, das erfindungsgemäße Kabelführungselement auszugestalten und weiterzubilden. Dazu wird verwiesen sowohl auf die dem Patentanspruch 1 nachgeordneten Patentansprüche als auch auf die Beschreibung bevorzugter Ausführungsbeispiele in Verbindung mit der Zeichnung. In der Zeichnung zeigen
- Fig. 1: ein Ausführungsbeispiel eines erfindungsgemäßen Kabelführungselements, im geöffneten Zustand,
- Fig. 2: das erste Kabelkanalelement des Kabelführungselements gemäß Fig. 1,
- Fig. 3: das zweite Kabelkanalelement des Kabelführungselements gemäß Fig. 1,
- Fig. 4: eine vergrößerte Darstellung eines Verschlusselements,
- Fig. 5: ein erste Ausführungsbeispiel eines Kabelkanalendstücks,
- Fig. 6: das Kabelkanalendstück gemäß Fig. 5, um 180° gedreht,
- Fig. 7: das Kabelführungselement gemäß Fig. 1 im mit Abdeckungen geschlossenen Zustand,
- Fig. 8: das Kabelführungselement gemäß Fig. 1, mit elektrischen Leitungen und
- Fig. 9: das Kabelführungselement gemäß Fig. 7, mit elektrischen Leitungen, im eingebauten Zustand.

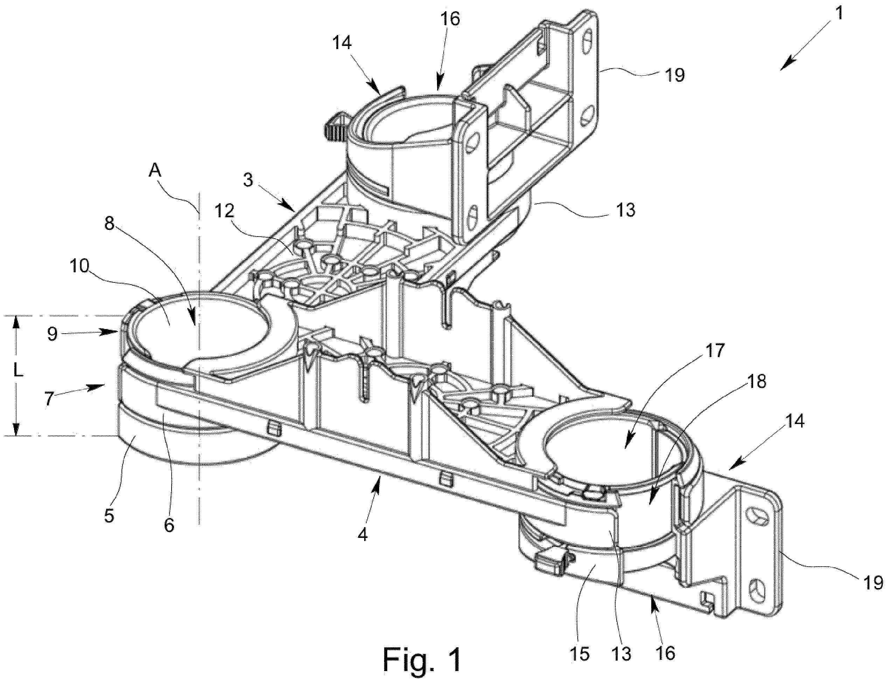

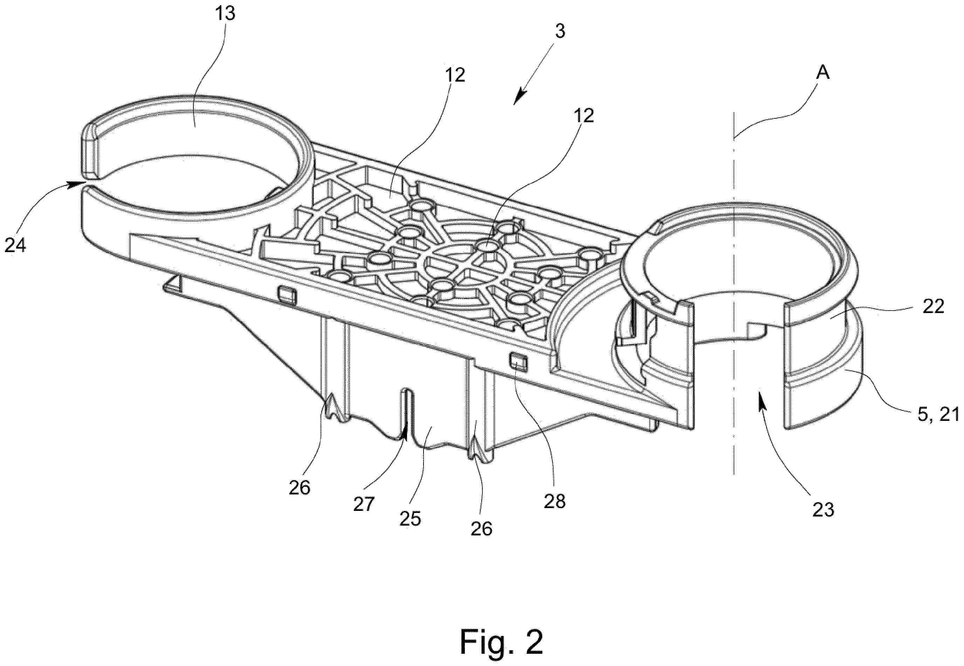

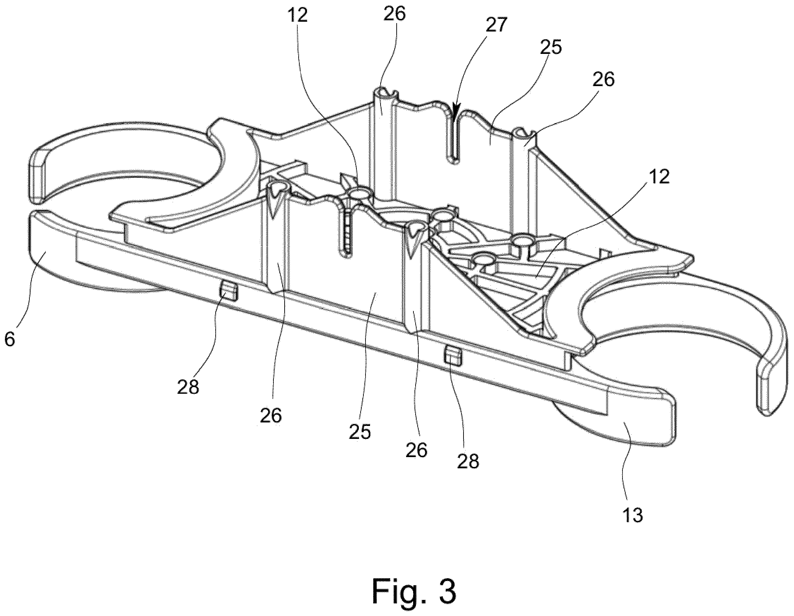

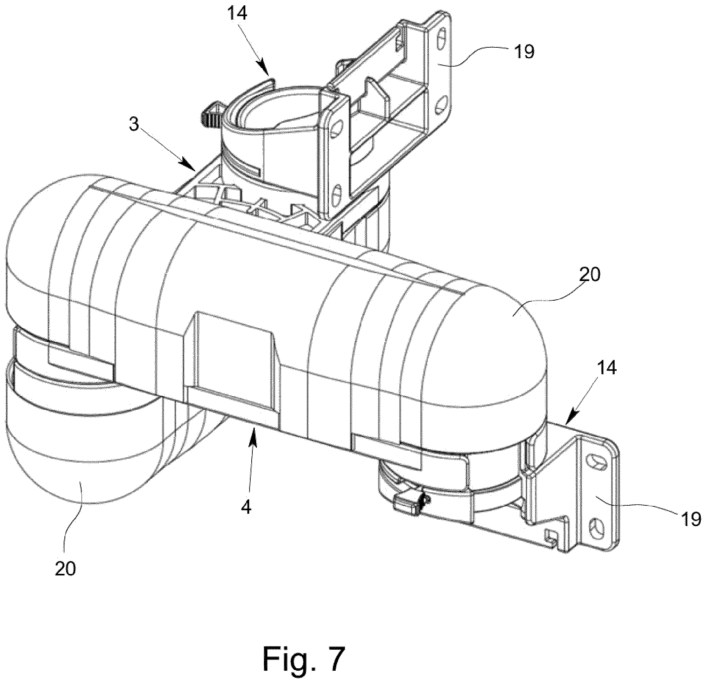

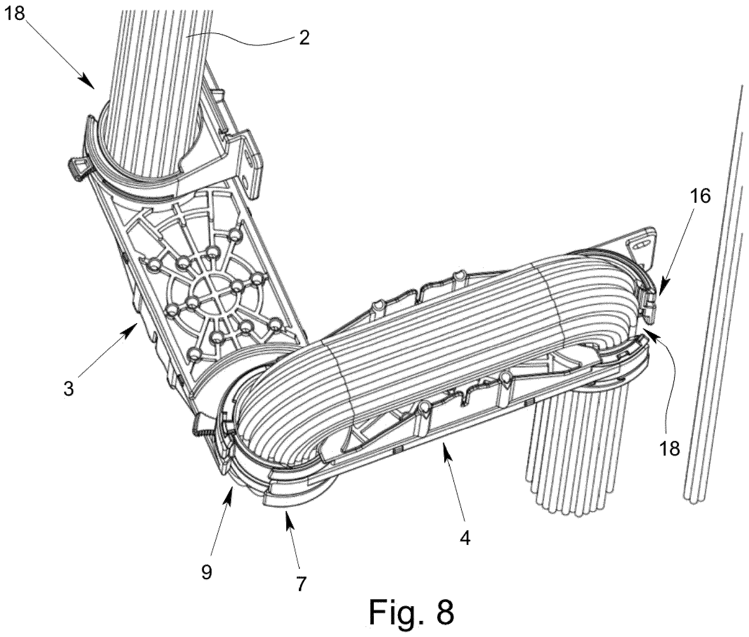

In Fig. 1 ist ein erfindungsgemäßes Kabelführungselement 1 im geöffneten Zustand dargestellt. Dasselbe Kabelführungselement 1 ist in Fig. 7 im geschlossenen Zustand und in Fig. 8 mit eingeführten Leitungen 2 dargestellt. Das Kabelführungselement 1 weist ein erstes Kabelkanalelement 3 und ein zweites Kabelkanalelement 4 auf, die jeweils für sich in den Figuren 2 und 3 dargestellt sind. Das erste Kabelkanalelement 3 weist an seinem ersten Ende einen Gelenkkopf 5 und das zweite Kabelkanalelement 4 an seinem ersten Ende eine entsprechende Gelenkpfanne 6 auf. Das erste Ende des ersten Kabelkanalelements 3 und das erste Ende des zweiten Kabelkanalelements 4 bilden so ein Gelenk 7, über das die beiden Kabelkanalelemente 3, 4 schwenkbar miteinander verbunden sind. In der Fig. 1 sind die Unterseite des ersten Kabelkanalelements 3 und die Oberseite des zweiten Kabelkanalelements 4 sichtbar.

Das Gelenk 7 bildet einen Kanal 8 aus, durch den elektrische Leitungen 2 (Fig. 8) vom ersten Kabelkanalelement 3 durch das Gelenk 7 zum zweiten Kabelkanalelement 4 geführt werden können. Um ein Einbringen - insbesondere ein nachträgliches Einbringen - und ein Herausnehmen elektrischer Leitungen 2 zu vereinfachen, weist das Gelenk 7 des Kabelführungselements 1 eine Ausnehmung 9 auf, die sich über die gesamte Länge L des Gelenks 7 erstreckt und durch die die Leitungen 2 seitlich ein- und ausgeführt werden können, ohne dass die Leitungen 2 mit ihrer ganzen Länge durch das Gelenk 7 durchgeführt werden müssen. Wie aus Fig. 1 ersichtlich, ist die Länge L die Ausdehnung des Gelenks 7 entlang seiner Längsachse A, die bei dem dargestellten Kabelführungselement 1 der Drehachse des Gelenks 7 entspricht.

Damit ein versehentliches Entweichen bzw. Hinausrutschen der elektrischen Leitungen 2 oder vereinzelter elektrischer Leitungen verhindert wird, ist bei dem Kabelführungselement 1 ein Verschlussteil vorgesehen, das in dem dargestellten Ausführungsbeispiel als Drehkulisse 10 ausgestaltet ist. Fig. 1 zeigt dabei das Kabelführungselement 1, bei dem die Ausnehmung 9 im Gelenk 7 durch die Drehkulisse 10 geschlossen ist.

Das zweite Ende des ersten Kabelkanalelements 3 und das zweite Ende des zweiten Kabelkanalelements 4 ist jeweils als Gelenkpfanne 13 ausgestaltet, wobei in der Gelenkpfanne 13 jeweils ein Kabelkanalendstück 14 mit einem Gelenkkopf 15 angeordnet ist. Die Gelenkpfannen 13 an dem zweiten Ende der Kabelkanalelemente 3, 4 und die Gelenkköpfe 15 der Kabelkanalendstücke 14 bilden dabei je ein Gelenk 16 aus, so dass die Kabelkanalendstücke 14 jeweils schwenkbar mit den Kabelkanalelementen 3, 4 verbunden sind. Ebenfalls wie das Gelenk 7 weisen die Gelenke 16 einen Kanal 17 zur Durchführung elektrischer Leitungen 2 und eine Ausnehmung 18 auf, wobei sich die Ausnehmung 18 über die gesamte Länge der Gelenke 16 erstreckt und zum Einführen und Ausführen der elektrischen Leitungen 2 dient. Außerdem weisen die Kabelkanalendstücke 14 Befestigungsabschnitte 19 auf, mit denen das Kabelführungselement 1 an seinem Einsatzort befestigt werden kann.

Anhand der Figuren 2 bis 6 werden nachfolgend die einzelnen Bestandteile des in Fig. 1 dargestellten Kabelführungselementes 1 näher erläutert.

In Fig. 2 zeigt das erste Kabelkanalelement 3 des in Fig. 1 dargestellten erfindungsgemäßen Kabelführungselements 1. In der in Fig. 2 gewählten Perspektive ist die Unterseite des ersten Kabelkanalelements 3 sichtbar. Das Kabelkanalelement 3 weist an seinem ersten Ende einen Gelenkkopf 5 und an seinem zweiten Ende eine Gelenkpfanne 13 auf. Der Gelenkkopf 5 ist als Rohrsegment 21 mit der Längsachse A ausgebildet. Das Rohrsegment 21 weist über seinen Umfang eine Nut 22 auf, die zur Aufnahme einer Gelenkpfanne 6 dient. Die Breite der Nut 22 ist dabei auf die Breite der aufzunehmenden Gelenkpfanne 6 abgestimmt, so dass die Gelenkpfanne 6 ein möglichst geringes - oder kein - Spiel in Richtung der Längsachse A des Rohrsegments 21 hat. Das Rohrsegment 21 weist außerdem eine Öffnung 23 auf, die einen Teil der Ausnehmung 9 des Gelenks 7 des Kabelführungselements 1 darstellt.

Die Gelenkpfanne 13 ist ringförmig ausgebildet und weist eine Öffnung 24 auf, die der einfachen Verbindung der Gelenkpfanne 13 mit einem korrespondierenden Gelenkkopf eines weiteren ersten Kabelkanalelements oder des Gelenkkopfes 15 eines Kabelkanalendstücks 14 dient. Zur Verbindung der Gelenkpfanne 13 mit dem Gelenkkopf wird die Gelenkpfanne 13 auf den Gelenckopf aufgesteckt, wozu an dem Gelenkkopf eine geeignete Schrägen ausgebildet ist.

Der mittlere Teil des ersten Kabelkanalelements 3 weist Löcher 12 auf, die im Boden des ersten Kabelkanalelements 3 ausgebildet sind. Durch die Löcher 12 können nicht dargestellte Kabelbinder oder ähnliche Elemente geführt werden, mit denen elektrische Leitungen 2 an dem Kabelkanalelement 3 fixiert werden können. Die Löcher 12 erstrecken sich über den gesamten mittleren Teil des ersten Kabelkanalelements 3, so dass - für den Fall, dass eine Vielzahl elektrischer Leitungen durch das Kabelführungselement 1 geführt werden - eine Gruppierung bzw. grobe Sortierungen der Leitungen 2 vorgenommen werden kann. Der mittlere Teil des ersten Kabelkanalelements 3 ist als einfache Schiene ausgebildet. Seitlich wird die Schiene durch Wände 25 begrenzt, die ebenfalls die Funktion einer Halterung zur Aufnahme einer Abdeckung 20 übernehmen. Zum Führen und Befestigen der Abdeckung 20 weisen die Wände 25 Führungsschienen 26 und Ausnehmungen 27 auf. Mit Hilfe der Rastnasen 28 wird die Abdeckung 20 an der Schiene verrastet, so dass sie sicher befestigt ist.

Fig. 3 zeigt das zweite Kabelkanalelement 4 des in Fig. 1 dargestellten erfindungsgemäßen Kabelführungselements 1, wobei in der perspektivischen Darstellung der Fig. 3 die Oberseite zu erkennen ist. Das zweite Kabelkanalelement 4 unterscheidet sich von dem in Fig. 2 dargestellten ersten Kabelkanalelement 3 dadurch, dass an dem ersten Ende des zweiten Kabelkanalelements 4 eine Gelenkpfanne 6 ausgebildet ist. Der mittlere Teil des zweiten Kabelkanalelements 4 ist identisch zu dem mittleren Teil des ersten Kabelkanalelements 3 ausgebildet, weist also ebenfalls Löcher 12 sowie zwei seitliche Wände 25 auf, die zur Befestigung mit einer Abdeckung 20 Führungsschienen 26, eine Ausnehmung 27 und Rastnasen 28 aufweisen.

Um ein Kabelführungselement 1 beliebiger Länge zu realisieren, kann eine Mehrzahl von ersten Kabelkanalelementen 3 miteinander und mit einem zweiten Kabelkanalelement 4 verbunden werden. Einen Abschluss bildet dann bevorzugt ein zweites Kabelkanalelement 4, so dass an beiden Enden des Kabelführungselements 1 eine Gelenkpfanne 13 ausgebildet ist, die jeweils mit einem Kabelkanalendstück 14 verbunden werden kann. Grundsätzlich besteht jedoch auch die Möglichkeit, zwei Kabelkanalelemente 3 gemäß Fig. 2 miteinander zu verbinden, wobei dann der Gelenkkopf 5 des einen Kabelkanalelements 3 mit der Gelenkpfanne 13 des anderen Kabelkanalelements 3 zu einem Gelenk 7 miteinander verbunden werden.

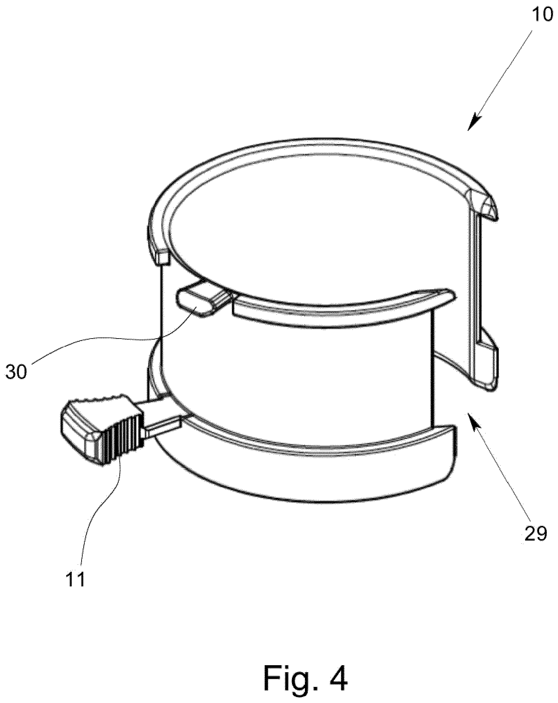

In Fig. 4 ist ein als Drehkulisse 10 ausgebildetes Verschlusselement dargestellt, das in den Gelenken 7, 16 des Kabelführungselements 1 angeordnet ist. Die Drehkulisse 10 ist als Rohrsegment ausgebildet und weist eine Öffnung 29 auf, durch die im in dem Gelenk montierten Zustand elektrische Leitungen 2 eingeführt werden können. Die Öffnung 29 bildet damit im eingebauten und geöffneten Zustand der Drehkulisse 10 einen Teil der Ausnehmung 9 des Gelenks 7. Die Drehkulisse 10 weist einen Betätigungshebel 11 auf, mit dem die Drehkulisse 10 in dem Gelenk 7, 16 aus einer die Ausnehmung 9, 18 freigebenden Stellung in eine die Ausnehmung 9, 18 verschließenden Stellung - und umgekehrt - bewegt werden kann. Des Weiteren weist die Drehkulisse 10 eine Nase 30 auf, mit der die Drehkulisse 10 arretiert werden kann, wie weiter unten beschrieben wird.

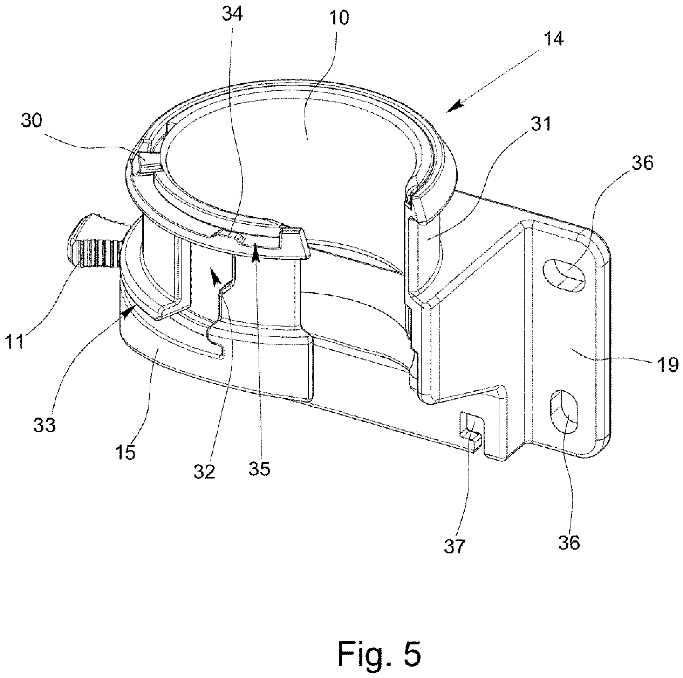

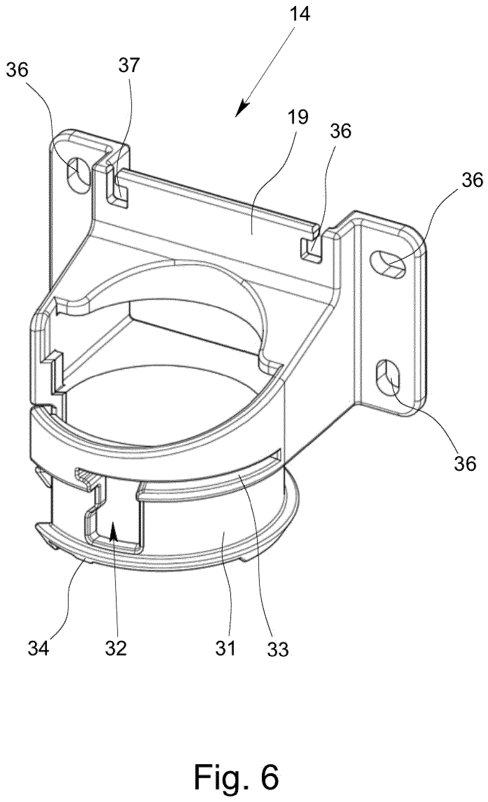

In Fig. 5 und 6 ist ein Kabelkanalendstück 14 dargestellt, in das die Drehkulisse 10 montiert ist. Das Kabelkanalendstück 14 weist einen Gelenkkopf 15 auf, der als Rohrsegment ausgebildet ist. Der Gelenkkopf 15 des Kabelkanalendstücks 14 ist identisch zu dem Gelenkkopf 5 des ersten Kabelkanalelements 3 ausgebildet. Der Gelenkkopf 15 weist eine Nut 31 auf, die zur Aufnahme einer korrespondierenden Gelenkpfanne 13 dient. Der Gelenkkopf 15 weist eine Öffnung 32 auf, durch die der Betätigungshebel 11 bei der Montage der Drehkulisse 10 geführt wird. Im montierten Zustand wird der Betätigungshebel 11 der Drehkulisse 10 zum Drehen der Drehkulisse 10 und damit zum Verschließen der Ausnehmung entlang eines Schlitzes 33 in dem Gelenkkopf 15 geführt. Dargestellt ist der geöffnete Zustand, in dem die Öffnung 29 in der Drehkulisse 10 die Ausnehmung im Kabelkanalendstück 14 freigibt. Der Gelenkkopf 15 weist an seinem oberen Rand eine Erhebung 34 auf. Über diese Erhebung 34 muss die Nase 30 der Drehkulisse 10 geschoben werden, wenn die Drehkulisse in den geschlossenen Zustand verbracht werden soll, so dass die Nase 30 in einer Endposition 35 einrastet. Um die Ausnehmung 18 wieder zu öffnen, muss die Nase 30 über die Erhebung 34 geführt werden, so dass durch diese Ausgestaltung ein versehentliches Öffnen verhindert wird.

Das Kabelkanalendstück 14 weist einen Befestigungsabschnitt 19 auf, mit dem das Kabelführungselement 1 an seinem Einsatzort befestigt werden kann. Hierfür sind Ausnehmungen 36 in dem Befestigungsabschnitt 19 ausgebildet, durch die beispielsweise Schrauben geführt werden können. Der Befestigungsabschnitt 19 weist bei der dargestellten Ausführungsform zwei Bereiche mit je zwei Ausnehmungen 26 auf, die seitlich des Gelenkkopfes 15 angeordnet sind. Des Weiteren weist das in Fig. 5 und 6 dargestellte Kabelkanalendstück 15 zwei hakenförmige Ausnehmungen 37 auf, die zur Befestigung von Kabelbindern dienen, so dass die Leitungen 2 fixiert werden können. Die beim Verschwenken der Kabelkanalelemente 3, 4 entstehende Torsion der Leitungen 2 wird dadurch nicht auf die Anschlussstelle der Leitungen 2 an den elektrischen Bauteilen übertragen, so dass eine Zug- und Drehentlastung der Leitungen 2 gewährleistet ist.

In Fig. 7 ist noch einmal das in Fig. 1 dargestellte Kabelführungselement 1 dargestellt, wobei sich das in Fig. 7 dargestellte Kabelführungselement 1 von dem in Fig. 1 dargestellten Kabelführungselement 1 dadurch unterscheidet, dass zusätzlich jeweils eine Abdeckungen 20 auf einem Kabelkanalelemente 3, 4 befestigt ist, das Kabelführungselement 1 und insbesondere der Aufnahmeraum für die Leitungen 2 somit geschlossenen ist. Die Kabelkanalelemente 3, 4 weisen jeweils eine separate Abdeckung 20 auf, wobei sich die Abdeckung 20 über das gesamte Länge der Kabelkanalelement 3, 4 erstreckt.

In Fig. 8 ist das Kabelführungselement 1 bestückt mit Leitungen 2 - jedoch ohne Abdeckungen 20 - dargestellt. Die elektrischen Leitungen 2 werden von der Seite durch die Ausnehmungen 9, 18 in die Gelenke 7, 16 des Kabelführungselements 1 ein- oder ausgeführt, so dass die Leitungen 2 nicht durch das ganze Kabelführungselement 1 und insbesondere die einzelnen Gelenke 7, 16 durchgeführt werden muss. Das Gelenk 7 befindet sich in einem geschlossenen Zustand, während das Gelenk 16 geöffnet dargestellt ist.

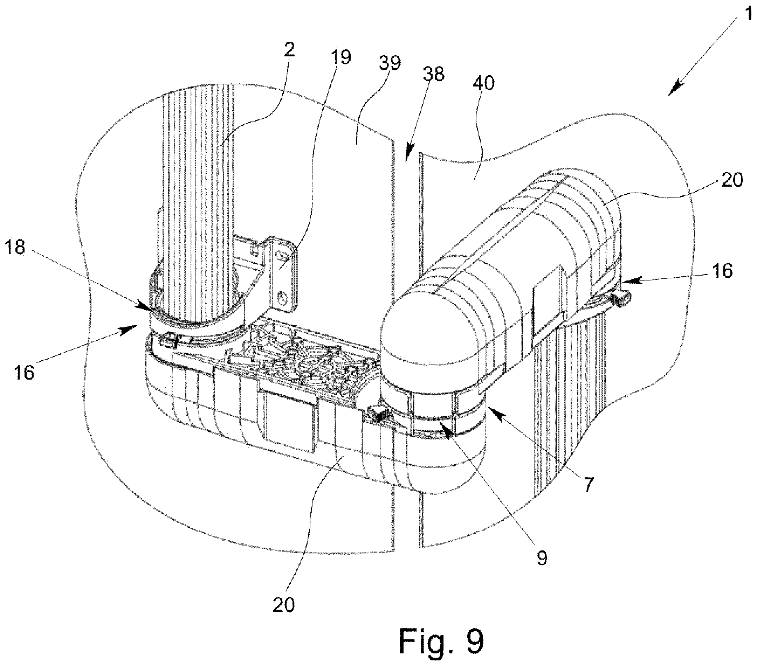

Fig. 9 zeigt ein erfindungsgemäßes Kabelführungselement 1 im eingebauten Zustand. Dargestellt ist neben dem mit Leitungen 2 bestückten und mit zwei Abdeckungen 20 verschlossenen Kabelführungselement 1 ein Ausschnitt eines Schaltschranks 38 mit einer Schaltschrankwand 39 und einer Schaltschranktür 40. Das Kabelführungselement 1 ist mit den Befestigungsabschnitten 19 an der Schaltschrankwand 39 und der Schaltschranktür 40 befestigt. Sichtbar ist nur die Befestigung an der Schaltschrankwand 39. Die elektrischen Leitungen 2 sind innerhalb des Kabelführungselements 1 durch die beiden Abdeckungen 20 abgedeckt und werden so vor Beschädigung und Verschmutzung geschützt. Durch die Gelenke 7, 16 weist das Kabelführungselement 1 eine hohe Flexibilität auf und bildet insgesamt eine sichere und elegante Lösung zur Führung elektrischer Leitungen 2. Die Ausnehmungen 9, 18 der Gelenke 7, 16 sind im geschlossenen Zustand dargestellt. So besteht nicht die Gefahr, dass elektrische Leitungen 2 versehentlich durch die Ausnehmungen 9, 18 herausgedrückt und beim Verschwenken eingeklemmt werden können.

Bei dem erfindungsgemäßen Kabelführungselement 1 ist auf sehr einfache Weise ein Ein- und Ausführen der elektrischen Leitungen 2 gewährleistet, auch einzelne Leitungen können problemlos nachträglich ein- und ausgeführt werden, da ein Durchführen der Leitungen 2 durch das ganze Kabelführungselement 1 oder die einzelnen Gelenke 7, 16 aufgrund der Ausnehmungen 9, 18 nicht erforderlich ist. Bei Bedarf kann das Kabelführungselement 1 durch die Verwendung eines oder mehrerer weiterer Kabelkanalelemente 3, 4 verlängert und damit einfach an den jeweiligen Einsatzort angepasst werden.

## Patentansprüche

1. Kabelführungselement (1), zur Führung elektrischer Leitungen (2), mit mindestens zwei Kabelkanalelementen (3, 4), wobei die Kabelkanalelemente (3, 4) schwenkbar miteinander verbunden sind,
wobei ein erstes Kabelkanalelement (3) an einem ersten Ende einen Gelenkkopf (5) und ein zweites Kabelkanalelement (4) an einem ersten Ende eine korrespondierende Gelenkpfanne (6) aufweist, so dass das erste Ende des ersten Kabelkanalelements (3) und das erste Ende des zweiten Kabelkanalelements (4) zusammen ein Gelenk (7) bilden, über das die Kabelkanalelemente (3, 4) miteinander verbunden sind, wobei das Gelenk (7) ohne zusätzliche Teile realisiert wird, indem der Gelenkkopf (5) und die Gelenkpfanne (6) an einem Ende jeweils eines Kabelkanalelements (3, 4) ausgebildet sind, dass das Gelenk (7) einen Kanal (8) zur Durchführung der Leitungen (2) aufweist, und dass in dem Gelenk (7) eine Ausnehmung (9) ausgebildet ist, die sich über die gesamte Länge des Gelenks (7) erstreckt.

2. Kabelführungselement (1) nach Anspruch 1, **dadurch gekennzeichnet, dass** das Kabelführungselement (1) ein Verschlusselement zum Verschließen der Ausnehmung (9) aufweist.

3. Kabelführungselement (1) nach Anspruch 2, **dadurch gekennzeichnet, dass** das Verschlusselement zum Verschließen der Ausnehmung (9) mit dem Gelenk (7) verbindbar, insbesondere verrastbar ist.

4. Kabelführungselement (1) nach Anspruch 2, **dadurch gekennzeichnet, dass** das Verschlusselement auch im geöffneten Zustand der Ausnehmung (9) mit dem Gelenk (7) verbunden ist, wobei das Verschlusselement insbesondere als Schieber oder Schwenkteil ausgebildet ist.

5. Kabelführungselement (1) nach Anspruch 4, **dadurch gekennzeichnet, dass** das Verschlusselement als Drehkulisse (10) ausgebildet ist, die in dem Gelenkkopf (5) geführt ist, wobei die Drehkulisse (10) vorzugsweise einen Betätigungshebel (11) aufweist.

6. Kabelführungselement (1) nach einem der Ansprüche 1 bis 5, **dadurch gekennzeichnet, dass** mindestens ein Kabelkanalelement (3, 4) mindestens eine Halterung und/oder ein Loch (12) zur Fixierung der Leitungen (2) aufweist.

7. Kabelführungselement (1) nach einem der Ansprüche 1 bis 6, **dadurch gekennzeichnet, dass** die Kabelkanalelemente (3, 4) jeweils ein zweites Ende aufweisen und dass die zweiten Enden eine Gelenkpfanne (13) oder einen Gelenkkopf aufweisen.

8. Kabelführungselement (1) nach Anspruch 7, **dadurch gekennzeichnet, dass** mindestens ein Kabelkanalendstück (14) vorgesehen ist, dass das Kabelkanalendstück (14) einen Gelenkkopf (15) oder eine Gelenkpfanne aufweist und dass das Kabelkanalendstück (14) und ein Ende eines Kabelkanalelements (3, 4) zusammen ein Gelenk (16) bilden, über das das Kabelkanalendstück (14) und das Kabelkanalelement (3, 4) miteinander verbunden sind, dass das Gelenk (16) einen Kanal (17) zur Durchführung der Leitungen (2) aufweist und dass in dem Gelenk (16) eine Ausnehmung (18) ausgebildet ist, die sich über die gesamte Länge des Gelenks (16) erstreckt.

9. Kabelführungselement (1) nach Anspruch 8, **dadurch gekennzeichnet, dass** das Kabelkanalendstück (14) mindestens einen Befestigungsabschnitt (19) aufweist.

10. Kabelführungselement (1) nach einem der Ansprüche 1 bis 9, **dadurch gekennzeichnet, dass** mindestens ein Kabelkanalelement (3, 4) eine Abdeckung (20) aufweist, wobei sich die Abdeckung (20) über das gesamte Kabelkanalelement (3, 4) erstreckt.

## Claims

1. A cable guiding element (1) for guidance of electrical lines (2), with at least two cable channel elements (3, 4), the cable channel elements (3, 4) being pivotally connected to one another,
wherein
a first cable channel element (3) on one first end has an articulated head (5) and a second cable channel element (4) on one first end has a corresponding articulated socket (6) so that the first end of the first cable channel element (3) and the first end of the second cable channel element (4) form a joint (7) via which the cable channel elements (3, 4) are connected to one another, wherein the joint (7) is implemented without additional parts in that the articulated head (5) and the articulated socket (6) are each formed on one end of a cable channel element (3, 4),
that the joint (7) has one channel (8) for passing the lines (2) through, and
that in the joint (7) a recess (9) is made which extends over the entire length of the joint (7).

2. Cable guiding element (1) according to claim 1, **characterized in that** the cable guiding element (1) has a closing element for closing of the recess (9).

3. Cable guiding element (1) according to claim 2, **characterized in that** the closing element for closing of the recess (9) can be connected, in particular latched, to the joint (7).

4. Cable guiding element (1) according to claim 2, **characterized in that** the closing element even in the opened state of the recess (9) is connected to the joint (7), wherein the closing element is made as a slider or swivel part.

5. Cable guiding element (1) according to claim 4, **characterized in that** the closing element is made as a rotating crank (10) which is guided in the articulated head (5), wherein the rotating crank (10) preferably has an actuating lever (11).

6. Cable guiding element (1) according to any one of claims 1 to 5, **characterized in that** at least one cable channel element (3, 4) has at least one holder and/or a hole (12) for fixing the lines (2).

7. Cable guiding element (1) according to any one of claims 1 to 6, **characterized in that** the cable channel elements (3, 4) each have one second end and that the second ends have an articulated socket (13) or an articulated head.

8. Cable guiding element (1) according to claim 7, **characterized in that** there is at least one cable channel end piece (14), that the cable channel end piece (14) has an articulated head (15) or an articulated socket and that the cable channel end piece (14) and one end of a cable channel element (3, 4) together form a joint (16) via which the cable channel end piece (14) and the cable channel element (3, 4) are connected to one another, that the joint (16) has a channel (17) for passage of the lines (2) and that in the joint (16) a recess (18) is made which extends over the entire length of the joint (16).

9. Cable guiding element (1) according to claim 8, **characterized in that** the cable channel end piece (14) has at least one mounting section (19).

10. Cable guiding element (1) according to any one of claims 1 to 9, **characterized in that** at least one cable channel element (3, 4) has a cover (20), wherein the cover (20) extends over the entire cable channel element (3, 4).

## Revendications

1. Élément de guidage de câble (1) pour guider des lignes électriques (2), comprenant au moins deux éléments de canal de câble (3, 4), les éléments de canal de câble (3, 4) étant connectés de manière pivotante l'un à l'autre,
un premier élément de canal de câble (3) présentant, à une première extrémité, une tête d'articulation (5) et un deuxième élément de canal de câble (4) présentant, à une première extrémité, une cavité d'articulation correspondante (6) de telle sorte que la première extrémité du premier élément de canal de câble (3) et la première extrémité du deuxième élément de canal de câble (4) forment ensemble une articulation (7), par le biais de laquelle les éléments de canal de câble (3, 4) sont connectés l'un à l'autre, l'articulation (7) étant réalisée sans pièces supplémentaires en réalisant la tête d'articulation (5) et la cavité d'articulation (6) au niveau d'une extrémité d'un élément de canal de câble respectif (3, 4), l'articulation (7) présentant un canal (8) pour le passage des lignes (2) et un évidement (9) étant réalisé dans l'articulation (7), lequel s'étend sur toute la longueur de l'articulation (7).

2. Élément de guidage de câble (1) selon la revendication 1, **caractérisé en ce que** l'élément de guidage de câble (1) présente un élément de fermeture pour fermer l'évidement (9).

3. Élément de guidage de câble (1) selon la revendication 2, **caractérisé en ce que** l'élément de fermeture peut être connecté, en particulier encliqueté, à l'articulation (7) pour fermer l'évidement (9).

4. Élément de guidage de câble (1) selon la revendication 2, **caractérisé en ce que** l'élément de fermeture est également connecté à l'articulation (7) dans l'état ouvert de l'évidement (9), l'élément de fermeture étant réalisé notamment sous forme de coulisseau ou de pièce pivotante.

5. Élément de guidage de câble (1) selon la revendication 4, **caractérisé en ce que** l'élément de fermeture est réalisé sous forme de coulisse rotative (10) qui est guidée dans la tête d'articulation (5), la coulisse rotative (10) présentant de préférence un levier d'actionnement (11).

6. Élément de guidage de câble (1) selon l'une quelconque des revendications 1 à 5, **caractérisé en ce qu'**au moins un élément de canal de câble (3, 4) présente au moins une fixation et/ou un trou (12) pour fixer les lignes (2).

7. Élément de guidage de câble (1) selon l'une quelconque des revendications 1 à 6, **caractérisé en ce que** les éléments de canal de câble (3, 4) présentent chacun une deuxième extrémité et **en ce que** les deuxièmes extrémités présentent une cavité d'articulation (13) ou une tête d'articulation.

8. Élément de guidage de câble (1) selon la revendication 7, **caractérisé en ce qu'**au moins un embout de canal de câble (14) est prévu, **en ce que** l'embout de canal de câble (14) présente une tête d'articulation (15) ou une cavité d'articulation et **en ce que** l'embout de canal de câble (14) et une extrémité d'un élément de canal de câble (3, 4) forment ensemble une articulation (16) par le biais de laquelle l'embout de canal de câble (14) et l'élément de canal de câble (3, 4) sont connectés l'un à l'autre, **en ce que** l'articulation (16) présente un canal (17) pour le passage des lignes (2) et **en ce que** dans l'articulation (16) est réalisé un évidement (18) qui s'étend sur toute la longueur de l'articulation (16).

9. Élément de guidage de câble (1) selon la revendication 8, **caractérisé en ce que** l'embout de canal de câble (14) présente au moins une portion de fixation (19).

10. Élément de guidage de câble (1) selon l'une quelconque des revendications 1 à 9, **caractérisé en ce qu'**au moins un élément de canal de câble (3, 4) présente un recouvrement (20), le recouvrement (20) s'étendant sur tout l'élément de canal de câble (3, 4).
